# DEMANDE DE BREVET EUROPEEN

(11) **EP 1 013 579 A1**
(43) Date de publication de la demande: **28.06.2000**
(21) Numéro de dépôt: 99403230.8
(22) Date de dépôt: 21.12.1999
(51) Int. Cl.: B65H 5/26, B65H 29/58, B65G 47/64

(54) **Installation de convoyage de cahiers imprimés**

(30) Priorité: 22.12.1998 FR 9816198
(71) Demandeur: Réalisations, Etudes & Commercialisation de Matériel pour l'Industrie, RECMI, 72400 La Ferté Bernard (FR)
(72) Inventeur: Bodereau, Jean-Pierre, 72400 La ferte Bernard (FR)
(74) Mandataire: Dawidowicz, Armand

(57) **Abrégé**

La présente invention concerne une installation pour le convoyage de cahiers sous forme de nappe depuis un poste présentant au moins deux sorties différenciées (S1, S2), tel qu'une rotative-plieuse (P), vers un autre poste de traitement des cahiers (E) présentant un convoyeur d'amenée (3) des cahiers, au moins un élément de convoyage (4) étant agencé pour relier une sortie (S1, S2) du premier poste au convoyeur d'amenée (3) vers l'autre poste.

L'invention consiste en ce que l'élément de convoyage (4) est unique, ledit élément de convoyage (4) étant mobile et positionnable en regard de l'une ou l'autre des sorties (S1, S2) du premier poste de traitement (P) pour la relier au convoyeur d'amenée (3).

Application aux installations de convoyage de nappe de cahiers.

## Description

La présente invention concerne une installation de convoyage d'une nappe de cahiers imprimés en sortie d'un poste de traitement de cahiers imprimés tel qu'une rotative-plieuse pour transporter ladite nappe vers un autre poste de traitement desdits cahiers.

Dans les imprimeries, le passage d'un poste de traitement des cahiers à un autre s'effectue par des installations de convoyage de nappes de cahiers les transportant d'un poste à un autre. Certains postes de traitement des cahiers imprimés peuvent présenter plusieurs sorties pour les cahiers, ces sorties étant généralement utilisées alternativement. C'est le cas des rotatives-plieuses qui présentent deux sorties des cahiers et dans lesquelles les cahiers sortent sous forme de nappe et doivent être ensuite amenés vers un autre poste de traitement tels que des empileurs, par exemple, à l'aide de convoyeurs au sol. Généralement, les sorties des rotatives-plieuses sont différenciées et sont utilisées à tour de rôle. Ces sorties sont généralement perpendiculaires l'une par rapport à l'autre et peuvent être en outre situées à deux hauteurs différentes.

Ainsi, les installations de convoyage des cahiers sous forme de nappe depuis la sortie d'une rotative-plieuse vers un poste de traitement tel qu'un poste d'empilage des cahiers comportent des éléments de convoyage fixes positionnés en regard des sorties de ladite plieuse et guidant la nappe de cahiers vers au moins un convoyeur au sol menant vers l'autre poste de traitement des cahiers.

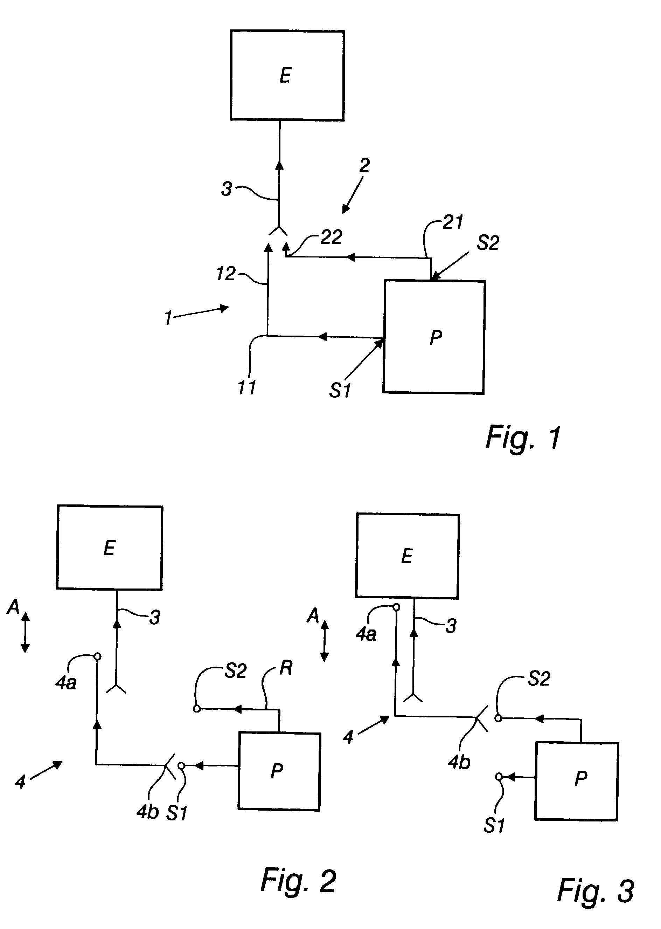

Ces éléments de convoyage présentent généralement au moins une partie linéaire de convoyage et au moins un virage pour amener une nappe de cahiers sortant de l'une ou l'autre des sorties de la rotative-plieuse vers un convoyeur au sol commun. Une telle installation de l'état de la technique est représentée dans la figure 1. Ainsi qu'on peut le voir, la rotative-plieuse P comporte deux sorties S1 et S2 disposées perpendiculaires l'une à l'autre. En regard de chaque sortie sont positionnés des éléments de convoyage 1, 2 amenant la nappe vers un convoyeur commun 3 amenant les cahiers pour leur entrée dans un empileur E. Pour l'une des sorties S1, l'élément de convoyage 1 présente une partie virage 11 à 90° et une partie linéaire 12 en sortie du virage conduisant vers le convoyeur au sol 3 se dirigeant vers l'empileur E. En sortie de S2, on prévoit un premier virage 21 à 90° et un second virage 22 à 90° dont la sortie conduit, éventuellement par une portion linéaire de convoyage, au même convoyeur 3 au sol.

Une telle installation présente donc au moins trois virages (11, 21, 22) et un aiguillage pour l'arrivée sur le convoyeur 3 commun au sol de manière à permettre le fonctionnement de l'installation avec l'une ou l'autre des sorties S1, S2 de la rotative-plieuse P.

Le trajet suivi par les éléments de convoyage en sortie de la rotative-plieuse définit un espace limité par lesdits éléments qui sont installés fixes. De ce fait, il n'est pas possible à un opérateur d'avoir accès à une sortie de la rotative-plieuse des deux côtés de ladite sortie. Ainsi, non seulement une telle installation est particulièrement complexe à mettre en oeuvre du fait du nombre de virages nécessaires mais de plus, elle rend également difficiles voire impossibles certaines interventions d'un opérateur, comme par exemple prendre des échantillons en sortie de la plieuse ou procéder à des réglages ou encore réaliser une maintenance de l'autre sortie inactive des deux côtés desdites sorties de la plieuse.

On connaît, par DE-A-1 259 781, un dispositif de convoyage dans lequel un élément de convoyage est positionnable entre un convoyeur d'amenée et plusieurs convoyeurs de sortie. Cet élément de convoyage est constitué d'un cadre fixe portant un chariot déplaçable que l'on positionne devant l'un ou l'autre des convoyeurs de sortie, le cadre fixe portant un dispositif permettant un rattrapage de tapis fixe du convoyeur. Ce dispositif est donc statique, le cadre fixe ne bougeant pas alors que le chariot mobile à l'intérieur se déplace. Un tel dispositif est donc limité sur la distance qu'il couvre en déplacement et en particulier, les différentes sorties doivent être relativement proches les unes des autres et, de plus, on obtient un dispositif trop imposant qui bloque l'accès aux sorties libres et empêche leur entretien.

Dans DE-A-2424037, on décrit une portion de convoyeur formant jonction entre deux directions de convoyage. Cette portion de convoyeur présente une série de rouleaux de convoyage définissant une première direction, les rouleaux définissant une trajectoire rectiligne, et disposée au-dessous sur le même cadre une série de rouleaux définissant une autre direction de convoyage, les rouleaux définissant une courbe se raccordant à une autre direction de convoyage. Le cadre est monté rotatif autour de son axe longitudinal de telle sorte que par simple rotation, on insère dans le dispositif de convoyage l'une ou l'autre des séries de rouleaux pour passer d'une direction à une autre.

Un tel dispositif permet des changements de direction mais n'est pas utile pour être positionné devant plusieurs sorties.

La présente invention a donc pour objet une installation pour le convoyage de cahiers sous forme de nappe depuis un poste présentant au moins deux sorties différenciées, tel qu'une rotative-plieuse, vers un autre poste de traitement des cahiers présentant un convoyeur d'amenée des cahiers, au moins un élément de convoyage étant agencé pour relier une sortie du premier poste au convoyeur d'amenée vers l'autre poste, caractérisée en ce que l'élément de convoyage est unique, ledit élément de convoyage étant mobile et positionnable en regard de l'une ou l'autre des sorties du premier poste de traitement pour la relier au convoyeur d'amenée.

Ainsi de manière avantageuse, l'élément de convoyage mobile est positionné en regard de la sortie en activité d'un poste de traitement tel qu'une rotative plieuse pour transporter la nappe de cahiers vers le convoyeur d'amenée qui transporte ladite nappe vers l'autre poste de traitement. L'autre sortie est inactive et ne comporte pas d'élément de convoyage associé de telle sorte que l'accès à ladite sortie en fonctionnement n'est pas empêché par la présence d'un élément de convoyage au niveau de l'autre sortie contrairement à l'état de la technique où deux éléments de convoyage étaient installés de manière fixe. De ce fait, il est possible pour un opérateur de prélever à la sortie en activité des échantillons ou bien de procéder à des réglages et ce, de manière simple des deux côtés de la sortie tandis que l'autre sortie non utilisée est librement accessible pour effectuer un entretien, des réglages, des réparations, etc.

Selon une forme de réalisation de l'invention, l'élément de convoyage mobile présente la forme d'au moins un coude dont une extrémité est agencée pour reposer à coulissement sur le convoyeur d'amenée et son autre extrémité est en regard d'une sortie du premier poste de traitement, ledit élément de convoyage étant entraînable en translation d'une position où ladite autre extrémité est en regard d'une première sortie dudit premier poste de traitement à une position où ladite autre extrémité est en regard d'une autre sortie dudit poste et vice-versa.

L'élément de convoyage présente donc un chemin de transport de forme coudée pour transporter les cahiers. Cet élément de convoyage est en particulier entraînable entre deux positions extrêmes par rapport au convoyeur d'amenée entre lesquelles une pluralité de positions peuvent être définies pour ledit élément de convoyage.

Selon une forme de réalisation préférée, l'élément de convoyage est constitué par un chariot mobile portant au moins un dispositif de changement de direction de la nappe tel qu'un virage, un renvoi d'angle, etc., débouchant sur une portion linéaire de convoyage des cahiers dont l'extrémité libre est agencée pour reposer à coulissement sur le convoyeur d'amenée vers un poste de traitement des cahiers. L'entraînement en déplacement du chariot mobile s'effectue par coulissement linéaire de l'extrémité libre de la portion linéaire de l'élément de convoyage sur le convoyeur d'entrée, l'autre extrémité de l'élément de convoyage constituée par l'entrée du dispositif de changement de direction de la nappe pouvant ainsi être positionnée en regard de l'une ou l'autre des sorties. Lesdites sorties sont de préférence agencées pour être alignées.

Une installation selon l'invention s'applique particulièrement bien au transfert de cahiers entre une rotative-plieuse et un empileur. Dans ce cas, la rotative-plieuse présente deux sorties perpendiculaires l'une à l'autre, l'une des sorties présentant alors au moins un dispositif de changement de direction fixe tel qu'un virage, la sortie du dispositif de changement de direction de la nappe constituant la nouvelle sortie de la rotative plieuse alignée avec l'autre sortie selon une ligne le long de laquelle se déplace l'élément de convoyage mobile.

Selon une variante de réalisation, le chariot mobile comporte deux dispositifs de changement de direction de la nappe de cahiers tels que des virages, des renvois d'angle, etc., positionnés à des hauteurs différentes dans le chariot, chacun présentant en sortie une portion linéaire de convoyage dont l'extrémité libre est agencée pour reposer à coulissement sur un convoyeur d'amenée vers un poste de traitement des cahiers. Cette forme de réalisation est plus particulièrement utilisée dans le cadre d'une rotative-plieuse à deux sorties différenciées, lesdites sorties se trouvant à des hauteurs différentes, l'un des dispositifs de changement de direction de la nappe venant en regard d'une sortie et l'autre dispositif venant en regard de l'autre sortie ménagée à une hauteur différente.

De préférence, l'extrémité libre de la portion linéaire de l'élément de convoyage est pourvue de moyens assurant le coulissement sur un convoyeur d'amenée tels que des roulettes par exemple.

De préférence, le convoyeur d'amenée est alors constitué de deux convoyeurs parallèles, l'extrémité d'une portion linaire de l'élément de convoyage reposant sur l'un des convoyeurs et l'extrémité de l'autre portion linéaire de l'élément de convoyage reposant sur l'autre convoyeur.

Une installation de convoyage selon l'invention est donc d'une réalisation simple et pratique permettant un accès aisé aux sorties d'un poste de traitement à plusieurs sorties tel qu'une rotative-plieuse même lors du fonctionnement. De plus, cette installation est moins complexe puisqu'on réduit le nombre de virages ou de renvois d'angle utilisés pour conduire les nappes de cahiers et il n'est plus nécessaire d'avoir d'aiguillage.

En outre, l'élément de convoyage mobile est généralement monté sur roues et peut donc être déplacé très simplement par un effort musculaire de l'opérateur sans besoin d'automatisme ce qui augmente également la sécurité.

De préférence, l'élément de convoyage comporte un centrage de la nappe intégré.

L'installation de convoyage selon l'invention peut relier deux postes de traitement tels que le premier poste présente au moins deux sorties différenciées sur une même machine telle qu'une rotative-plieuse ou bien ledit poste peut être constitué de deux machines montées en parallèle et présentant chacune une sortie.

La présente invention a donc également pour objet un élément de convoyage de cahiers sous forme de nappe, en particulier destiné à relier un poste de traitement de cahiers présentant au moins deux sorties différenciées, tel qu'une rotative-plieuse, à un autre poste de traitement des cahiers présentant un convoyeur d'amenée des cahiers, caractérisé en ce que l'élément de convoyage est mobile et présente la forme d'au moins un coude dont une extrémité est agencée pour reposer à coulissement sur le convoyeur d'amenée et l'autre extrémité est agencée pour venir en regard d'une sortie du premier poste de traitement.

On décrira maintenant un exemple de réalisation de l'invention plus en détail en référence au dessin dans lequel :
la figure 1 représente un plan schématique d'une installation de convoyage selon l'état de la technique ;
la figure 2 représente un plan schématique d'une installation de convoyage selon l'invention (en position de convoyer une nappe de cahiers d'une sortie S1 d'une plieuse P à un équipement E) ;
la figure 3 représente une installation selon la figure 2 pour un fonctionnement différent (en position de convoyer une nappe de cahiers d'une sortie S2 de la plieuse P à un équipement E) ;
la figure 4 représente de manière schématique une vue latérale d'un élément de convoyage selon l'invention ;

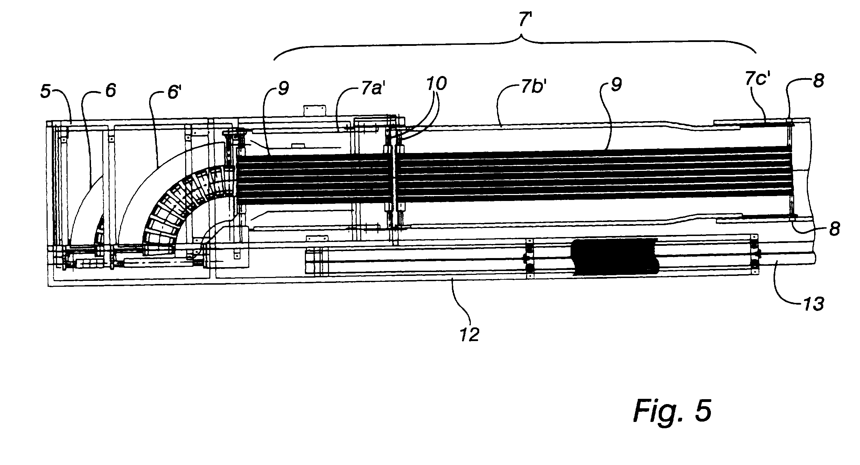

la figure 5 représente de manière schématique une vue du dessus de l'élément de la figure 4 ; et
les figures 6a et 6b représentent une vue en élévation latérale d'une installation selon l'invention à deux positions de travail différentes.

Une installation de convoyage selon l'invention comporte un élément de convoyage unique 4 agencé pour relier une sortie S1 d'un poste de traitement de cahiers imprimés présentant au moins deux sorties différenciées S1, S2 tel qu'une rotative-plieuse P à un convoyeur d'amenée 3 des cahiers vers un équipement E définissant un autre poste de traitement desdits cahiers tel qu'un empileur E.

Cet élément de convoyage 4 est unique, mobile et donc déplaçable entre la sortie S1 et la sortie S2 de telle sorte qu'il relie soit la sortie S1 au convoyeur d'amenée 3 (figure 2) soit il relie la sortie S2 audit convoyeur d'amenée 3 (figure 3). Ce convoyeur d'amenée 3 peut être directement lié à l'équipement E ou bien faire partie d'un circuit de convoyage comportant plusieurs convoyeurs vers l'équipement E.

Comme cela est clairement visible de ces deux figures 2 et 3, lorsque l'élément de convoyage 4 est positionné pour relier la sortie S1 au convoyeur d'amenée 3, ladite sortie S1 est accessible par un opérateur par ses deux côtés tandis que la sortie S2 est totalement libre d'accès. Lorsque c'est la sortie S2 qui est reliée au convoyeur 3, elle est toujours accessible des deux côtés par un opérateur qui en outre peut accéder librement à la sortie Si.

L'élément de convoyage 4 selon l'invention présente de préférence une forme coudée, c'est-à-dire que le chemin de transport des cahiers dudit élément de convoyage présente une forme coudée, dont l'une 4a des extrémités repose à coulissement sur le convoyeur d'amenée 3 de telle sorte que l'autre extrémité 4b est positionnée devant l'une ou l'autre des sorties S1, S2 par entraînement en déplacement de l'élément de convoyage mobile 4, l'extrémité 4a étant agencée pour coulisser sur le convoyeur 3.

Lorsque les sorties différenciées S1 et S2 de la rotative-plieuse P sont perpendiculaires l'une à l'autre, l'une S2 des sorties présente un élément R permettant ainsi d'aligner ladite sortie S2 avec la sortie S1 pour permettre le déplacement de l'élément de convoyage 4 de l'une à l'autre selon une translation linéaire telle que représentée par la double flèche A, l'extrémité 4a de l'élément de convoyage 4 coulissant sur le convoyeur 3.

Lorsque la rotative-plieuse P présente deux sorties différenciées S1 et S2 ménagées à des hauteurs différentes, l'élément de convoyage 4 est constitué d'un chariot mobile 5, monté sur roues 5a par exemple, pourvu d'un premier dispositif de changement de direction de la nappe tel qu'un virage 6 par exemple à 90° et d'une portion linéaire de convoyage 7 ménagée à la sortie dudit virage 6. Ainsi, le dispositif de changement de direction de la nappe et la portion linéaire 7 définissent la forme coudée de l'élément de convoyage 4. L'entrée du virage 6 constituant l'extrémité 4b de l'élément de convoyage 4 coudé vient se positionner en regard d'une sortie S1 tandis que l'extrémité libre de la portion linéaire de convoyage 7 constitue l'extrémité 4a reposant sur le convoyeur d'amenée 3. L'entrée du dispositif de changement de direction pourrait être raccordée à une portion linéaire venant en regard d'une sortie.

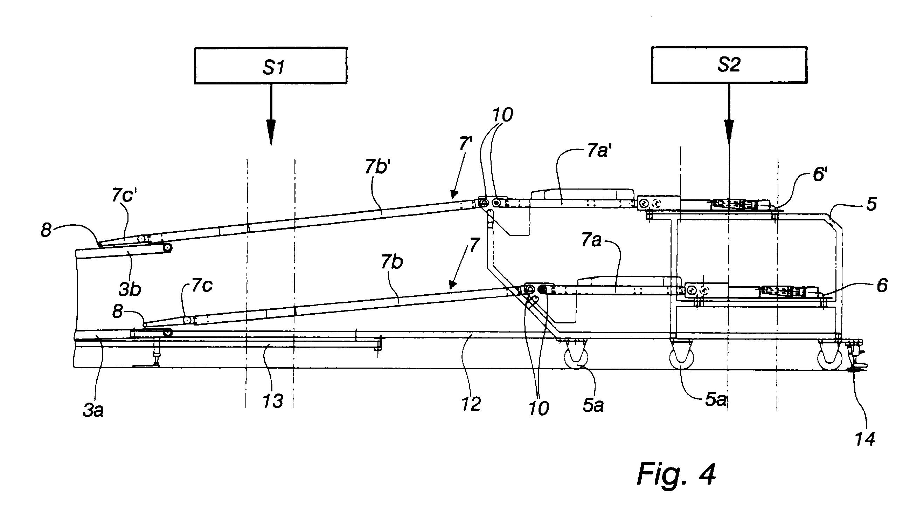

Pour venir en regard de la deuxième sortie S2 ménagée à une hauteur différente de S1, le chariot 5 comporte un second virage 6' à la sortie duquel s'étend une seconde portion linéaire de convoyage 7' (figure 4), l'élément de convoyage présentant deux coudes.

Le convoyeur d'amenée 3 est alors constitué de deux convoyeurs parallèles 3a, 3b, l'extrémité libre d'une portion linaire 7 de l'élément de convoyage reposant sur l'un des convoyeurs 3a et l'extrémité libre de l'autre portion linéaire 7' de l'élément de convoyage 4 reposant sur l'autre convoyeur 3b.

Les deux extrémités libres des portions linéaires 7 et 7' sont pourvues de moyens tels que des roulettes 8 permettant leur coulissement sur les convoyeurs respectif 3a, 3b lors d'un entraînement en translation du chariot mobile 4.

De préférence, chaque portion linéaire 7, 7' se décompose en deux parties dont l'une 7a, 7a' est montée fixe dans le chariot 5, l'autre 7b, 7b' étant montée pivotante à son extrémité et en saillie vers l'extérieur du chariot 5, l'extrémité libre de la partie pivotante 7b, 7b' de la portion linéaire 7, 7' reposant à coulissement sur le convoyeur d'amenée 3, c'est-à-dire présentant les moyens autorisant le coulissement sur le convoyeur 3 tel que les roulettes 8.

De préférence, l'extrémité libre des portions pivotantes 7b, 7b' peut également présenter une portion 7c, 7c' pour favoriser la mise en appui de l'élément de convoyage 4 sur le convoyeur d'amenée 3 et le passage de la nappe de cahiers de l'un à l'autre. Cette portion 7c, 7c' présente une pente inclinée de manière à réduire la différence de hauteur entre ladite portion linéaire 7, 7' et le convoyeur 3a, 3b au niveau du passage de la nappe de cahiers de la portion linéaire 7, 7' au convoyeur 3a, 3b. De préférence, cette portion 7c, 7c' peut être montée pivotante à l'extrémité de la portion 7b, 7b'.

Chaque portion linéaire de convoyage 7, 7' est constituée de courroies 9 entraînées en translation par des rouleaux d'entraînement 10 montés sur le chariot 5 tandis que les virages 6, 6' sont de tout type connu en soi.

Afin de faciliter l'entraînement en déplacement de l'élément de convoyage 4, l'élément de convoyage 4 et plus précisément le chariot mobile 5 est monté par un bras 12 guidé dans un rail de guidage 13 fixé au sol et s'étendant parallèlement à la direction de transport du convoyeur d'amenée 3.

De même, l'élément de convoyage 5 comporte un frein 14 porté par le chariot mobile 5 permettant le blocage dudit chariot 5 à une position stable.

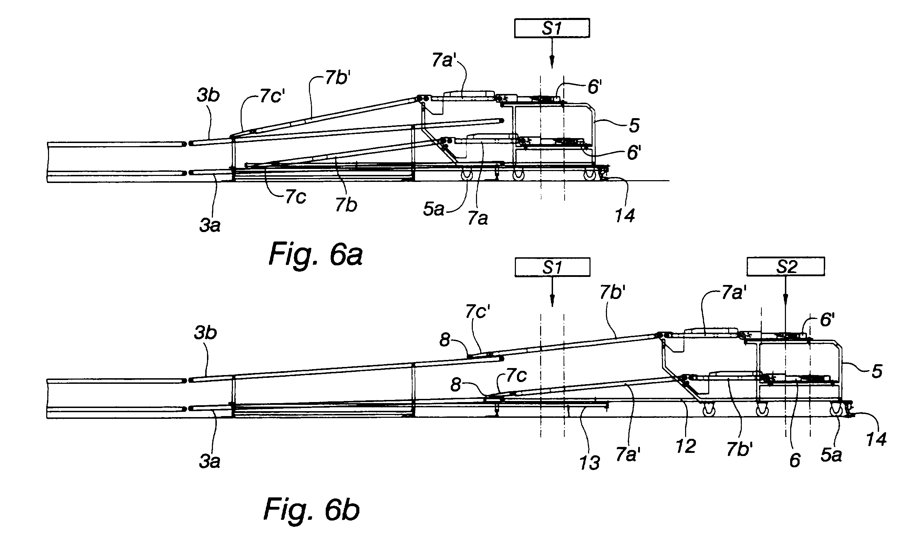

Comme on peut le voir aux figures 6a et 6b, l'élément de convoyage 4 est entraînable en translation entre une position où son extrémité 4a est engagée au maximum sur le convoyeur d'amenée 3 (figure 6a) l'un des virages 6' étant en regard de S1 et une position où ladite extrémité 4a coïncide avec l'extrémité du convoyeur 3, le chariot mobile 5 étant écarté dudit convoyeur 3 (figure 6b) le virage 6 étant en regard de la sortie S2.

Ainsi, l'élément de convoyage 4 est positionnable au moins entre deux positions extrêmes par rapport au convoyeur d'amenée 3, et cet intervalle de déplacement peut correspondre à une pluralité de positions possibles pour ledit élément de convoyage 4. La définition des positions extrêmes dépend à la fois de la longueur du convoyeur d'amenée 3 sur laquelle peut coulisser l'élément de convoyage 4 et de la longueur de la portion linéaire 7, 7' dudit élément de convoyage 4.

## Revendications

1. Installation pour le convoyage de cahiers sous forme de nappe depuis un poste présentant au moins deux sorties différenciées (S1, S2), tel qu'une rotative-plieuse (P), vers un autre poste de traitement des cahiers (E) présentant un convoyeur d'amenée (3) des cahiers, au moins un élément de convoyage (4) étant agencé pour relier une sortie (S1, S2) du premier poste au convoyeur d'amenée (3) vers l'autre poste,
caractérisée en ce que l'élément de convoyage (4) est unique, ledit élément de convoyage (4) étant mobile et positionnable en regard de l'une ou l'autre des sorties (S1, S2) du premier poste de traitement (P) pour la relier au convoyeur d'amenée (3).

2. Installation selon la revendication 1,
caractérisée en ce que l'élément de convoyage (4) mobile présente la forme d'au moins un coude dont une extrémité (4a) est agencée pour reposer à coulissement sur le convoyeur d'amenée (3) et son autre extrémité est en regard d'une sortie (S1, S2) du premier poste de traitement, ledit élément de convoyage (4) étant entraînable en translation d'une position où ladite autre extrémité (4b) est en regard d'une première sortie (S1) dudit premier poste de traitement à une position où ladite autre extrémité (4b) est en regard de la seconde sortie (S2) dudit poste et vice-versa.

3. Installation selon l'une des revendications 1 et 2,
caractérisée en ce que l'élément de convoyage (4) est constitué par un chariot mobile (5) portant au moins un dispositif de changement de direction de la nappe tel qu'un virage (6), un renvoi d'angle, etc., débouchant sur une portion linéaire de convoyage (7) des cahiers dont l'extrémité libre est agencée pour reposer à coulissement sur le convoyeur d'amenée (3) vers un poste de traitement des cahiers.

4. Installation selon la revendication 3,
caractérisée en ce que le chariot mobile (5) comporte deux dispositifs de changement de direction de la nappe de cahiers tels que des virages (6, 6'), des renvois d'angle, etc., positionnés à des hauteurs différentes dans le chariot (5), chacun présentant en sortie une portion linéaire de convoyage (7, 7') dont l'extrémité libre est agencée pour reposer à coulissement sur un convoyeur d'amenée (3) vers un poste de traitement des cahiers, l'un des dispositifs de changement de direction de la nappe (6) venant en regard d'une sortie (S1) d'un poste de traitement tel qu'une rotative-plieuse à deux sorties différenciées (S1, S2) et l'autre dispositif de changement de direction de la nappe (6') venant en regard de l'autre sortie (S2) ménagée à une hauteur différente.

5. Installation selon la revendication 4,
caractérisée en ce que le convoyeur d'amenée (3) est constitué de deux convoyeurs parallèles (3a, 3b), l'extrémité libre d'une portion linaire (7) de l'élément de convoyage (4) reposant sur l'un des convoyeurs (3a) et l'extrémité libre de l'autre portion linéaire (7') de l'élément de convoyage (4) reposant sur l'autre convoyeur (3b).

6. Installation selon l'une des revendications 3 à 5,
caractérisée en ce que la portion linéaire (7, 7') se décompose en deux parties dont l'une (7a, 7a') est montée fixe dans le chariot (5), l'autre (7b, 7b') étant montée pivotante à son extrémité, l'extrémité libre de la partie pivotante (7b, 7b') de la portion linéaire (7, 7') reposant à coulissement sur le convoyeur d'amenée (3).

7. Installation selon l'une des revendications 1 à 6,
caractérisée en ce que l'élément de convoyage (4) est monté, par un bras (12), guidé dans un rail de guidage (13) fixé au sol et s'étendant parallèlement à la direction de transport du convoyeur d'amenée (3).

8. Elément de convoyage de cahiers sous forme de nappe, en particulier destiné à relier un poste de traitement de cahiers présentant au moins deux sorties différenciées (S1, S2), tel qu'une rotative-plieuse, à un autre poste de traitement des cahiers présentant un convoyeur d'amenée des cahiers,
caractérisé en ce que l'élément de convoyage est mobile et présente la forme d'au moins un coude dont une extrémité (4a) est agencée pour reposer à coulissement sur le convoyeur d'amenée (3) et l'autre extrémité est agencée pour venir en regard d'une sortie (S1, S2) du premier poste de traitement.

9. Elément de convoyage selon la revendication 8,
caractérisé en ce qu'il est constitué par un chariot mobile (5) portant au moins un dispositif de changement de direction de la nappe tel qu'un virage (6), un renvoi d'angle, etc., débouchant sur une portion linéaire de convoyage (7) des cahiers dont l'extrémité libre est agencée pour reposer à coulissement sur le convoyeur d'amenée (3) vers un poste de traitement des cahiers.

10. Elément de convoyage selon la revendication 9,
caractérisé en ce que le chariot mobile comporte deux dispositifs de changement de direction de la nappe tels que des virages, des renvois d'angle positionnés à des hauteurs différentes dans le chariot, chacun présentant en sortie une portion linéaire de convoyage dont l'extrémité libre est agencée pour reposer à coulissement sur un convoyeur d'amenée.

11. Elément de convoyage selon l'une des revendications 9 et 10,
caractérisé en ce que la portion linéaire (7, 7') se décompose en deux parties dont l'une (7a, 7a') est montée fixe dans le chariot (5), l'autre (7b, 7b') étant montée pivotante à son extrémité, l'extrémité libre de la partie pivotante (7b, 7b') de la portion linéaire (7, 7') reposant à coulissement sur le convoyeur d'amenée (3).

12. Elément de convoyage selon l'une des revendications 9 à 11,
caractérisé en ce que la portion linéaire (7, 7') de l'élément de convoyage (4) est constituée de courroies (9) entraînées en translation par des rouleaux d'entraînement (10) montés sur le chariot (5).

13. Elément de convoyage selon l'une des revendications 9 à 12,
caractérisé en ce que l'extrémité libre des portions pivotantes (7b, 7b') présente une portion (7c, 7c') présentant une pente inclinée de manière à réduire la différence de hauteur entre la portion linéaire (7, 7') et le convoyeur.

14. Elément de convoyage selon l'une des revendications 8 à 13,
caractérisé en ce que l'élément de convoyage (4) comporte un frein (14).
